# EUROPEAN PATENT APPLICATION

(11) **EP 4 517 145 A1**
(43) Date of publication of application: **05.03.2025**
(21) Application number: 23194990.0
(22) Date of filing: 01.09.2023
(51) Int. Cl.: F16K 27/00, B60H 1/00, B60K 11/02

(54) **VALVE MODULE FOR A REFRIGERANT DISTRIBUTION DEVICE OF A THERMAL MANAGEMENT SYSTEM**

(71) Applicant: VALEO SYSTEMES THERMIQUES, 78320 Le Mesnil Saint-Denis (FR)
(72) Inventor: FIENE, Andreas, 96476 Bad Rodach (DE); HEDAOO, Satyam, Tamil Nadu 600130 (IN)
(74) Representative: Valeo Systèmes Thermiques

(57) **Abstract**

The invention relates to a valve module for a refrigerant fluid distribution device of a thermal management system, the thermal management system comprising a heat ventilation and air conditioning system (HVAC) condenser, an evaporator-condenser, an HVAC evaporator, a chiller, an accumulator or IHX (internal heat exchanger), and a compressor, the valve module comprising in a same block a set of eight valves.

## Description

The present invention relates to a valve module for a refrigerant distribution device of a thermal management system.

### Technical Field

This disclosure pertains to the automotive field.

### Background Art

The development of electric vehicles has brought new issues to the automotive field, in particular in view of the limited autonomy of the electric battery as well as the limited space that can be dedicated to the thermal management system at the bottom of the vehicle system because of the positioning of the electric battery at the front of the vehicle. For these reasons, it is more and more searched for compact thermal management systems.

### Summary

This disclosure improves the situation.

It is proposed a valve module, preferably for a refrigerant fluid distribution device of a thermal management system, comprising a main body, said main body comprising:
- at least one bore inside said main body along an axis called valve axis, the said bore being configured to receive a valve,
- at least one entry channel for feeding the valve with a fluid and one exit channel for evacuating the said fluid from the valve,
at least one of the entry channels and the exit channels extends on a first level of the main body and at least another of the entry channels and the exit channels extends on a second level of the main body.

In other words, the channels extending on different levels means that the channels extend along different parallel planes.

Particularly, the first level and the second level extend along planes that are perpendicular to the valve axis.

Thanks to the main body with two levels only, the fluid circulation inside the refrigerant fluid distribution is more efficient, fewer connecting pipes are involved, and the volume of the device is drastically reduced. Also, its process of manufacturing is simplified since the valve block can be machined.

According to another aspect, all valve axis are parallel one to another.

According to another aspect, each valve comprises at least one entry channel and one exit channel, the entry channels and the exit channels being parallel or perpendicular one to another.

According to another aspect, the valve module further comprises at least one bypass channel for bypassing at least one valve of the valve module.

According to another aspect, said at least one bypass channel extends parallel or perpendicular to the entry channels and the exit channels.

According to another aspect, said at least one bypass channel extends on the first level or on the second level.

According to another aspect, the valve module comprises, in a same block, a 1st valve, a 3rd valve and a 8th valve, at least two of the 1st valve (1), the 3rd valve (3) and the 8th valve (8) being aligned in the sense that a same line is perpendicular to the valve axis of the 1 st valve, the valve axis of the 3rd valve, and the valve axis of the 8th valve.

According to another aspect, the valve module comprises, in a same block, a 7th valve, a 4th valve and a 2nd valve, at least two of the 7th valve, the 4th valve and the 2nd valve being aligned in the sense that a same line is perpendicular to the valve axis of the 7th valve, the valve axis of the 4th valve, and the valve axis of the 2nd valve.

According to another aspect, the valve module comprises, in a same block, a 5th valve and a 6th valve, the 5th valve and the 6th valve being aligned in the sense that a same line is perpendicular to the valve axis of the 5th valve and to the valve axis of the 6th valve.

According to another aspect, the 1st valve, the 2nd valve and the 6th valve are aligned in the sense that a same line is perpendicular to the valve axis of the 1st valve, the valve axis of the 2nd valve, and the valve axis of the 6th valve.

According to another aspect, at least two of the 8th valve, the 7th valve and the 5th valve are aligned in the sense that a same line is perpendicular to the valve axis of the 8th valve, the valve axis of the 7th valve, and the valve axis of the 5th valve.

According to another aspect, the valve module for a refrigerant fluid distribution device of a thermal management system, the thermal management system comprising:
- a compressor,
- a first heat exchanger,
- at least one valve being an expansion valve,
- an evaporator,
the expansion valve being arranged on the valve module.

According to another aspect, at least one valve of the valve module is disposed upstream of the first heat exchanger.

According to another aspect, the evaporator is arranged on the main body of the valve module, preferably on the face of the valve module opposite to the face receiving the valves.

According to another aspect, the thermal management system comprising a heat ventilation and air conditioning system (HVAC) condenser, an evaporator-condenser, an HVAC evaporator, a chiller, an accumulator or IHX (internal heat exchanger), and a compressor, the valve module comprising in a same block:
- a 1st valve for managing fluid flowing into the HVAC condenser, the 1st valve being arranged to be connected to the compressor,
- a 2nd valve for managing fluid to flow into the evaporator-condenser, the 2nd valve being arranged to be connected to the compressor,
- a 3rd valve arranged between an exit of the HVAC condenser and an 8th valve,
- a 4th valve arranged between the exit of the HVAC condenser and the evaporator-condenser,
- a 5th valve for managing fluid flowing into the chiller, arranged between a 6th valve and able to be connected to a chiller,
- a 6th valve arranged between an exit of the evaporator or IHX and the 5th valve,
- the 7th valve being arranged between the 4th valve and the accumulator or IHX, and
- the 8th valve being arranged between the 3rd valve or exit of HVAC evaporator and the accumulator or IHX.

The invention also relates to a refrigerant fluid distribution device for a thermal management system of a vehicle, comprising a valve module as already described.

The invention also relates to a thermal management system for a vehicle, comprising a refrigerant fluid distribution device as already described.

### Brief Description of Drawings

Other features, details and advantages will be shown in the following detailed description and on the figures, on which:
**Fig. 1**

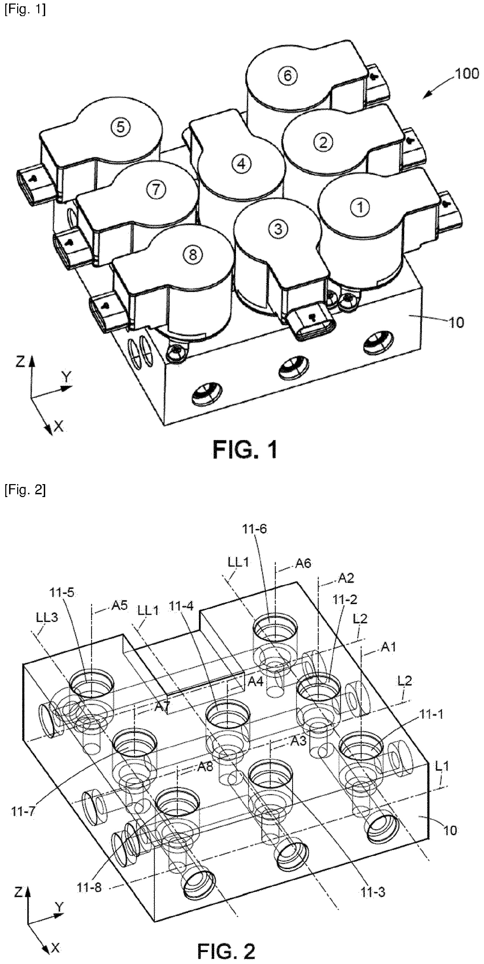

   [Fig. 1] is a perspective view of a valve island (also called valve block) for a refrigerant fluid distribution device of a thermal management system.
**Fig. 2**
   [Fig. 2] is a perspective view of a main body of the valve island of figure 1, bores being shown by transparency.
**Fig. 3**

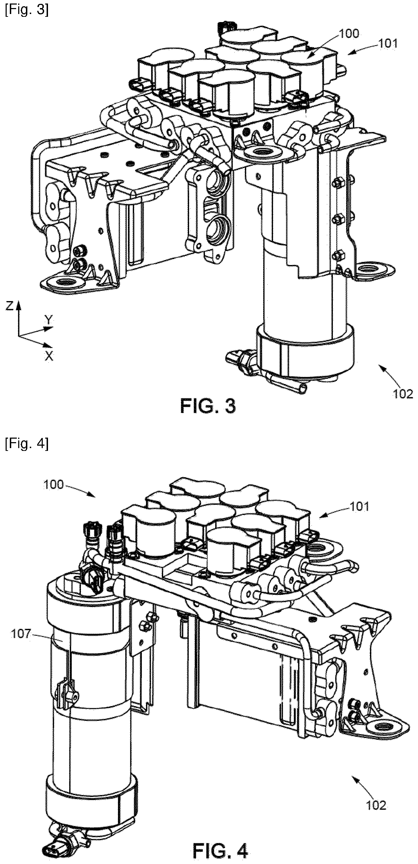

   [Fig. 3] is a perspective view of a thermal management system equipped with the valve island of figure 1.
**Fig. 4**
   [Fig. 4] is another perspective view of the thermal management system of figure 3.
**Fig. 5**

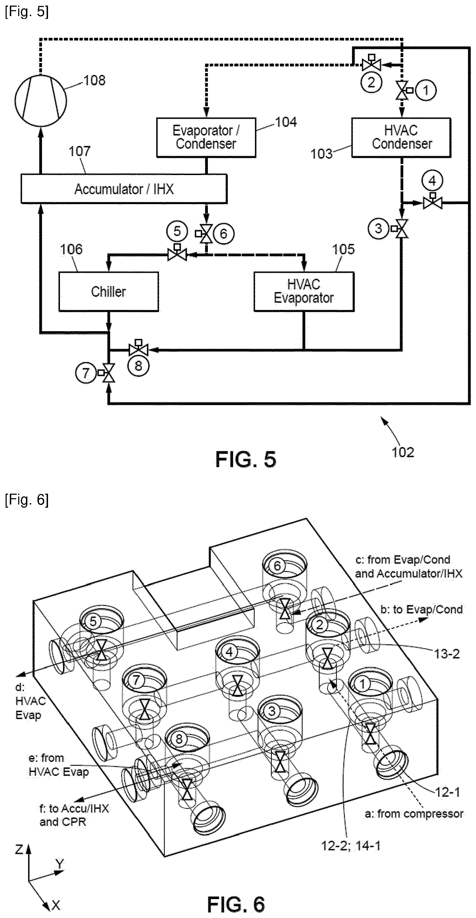

   [Fig. 5] is a schematic view of the fluid connections of valves of the valve island of figure 1 as used in the thermal management system of figures 3 and 4.
**Fig. 6**
   [Fig. 6] is a perspective view of the main body of figure 2 in an AC mode - cabin cooling mode.
**Fig. 7**

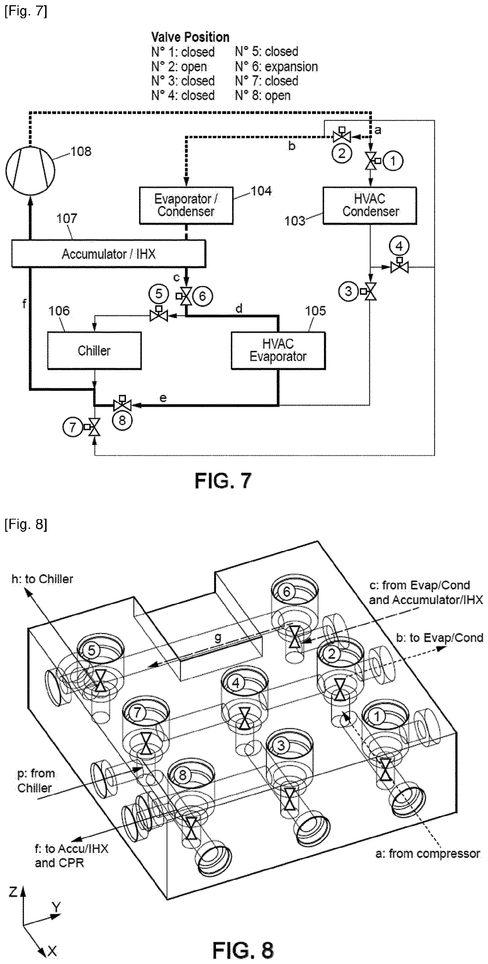

   [Fig. 7] is a schematic view of the fluid connections of figure 5 in the AC mode - cabin cooling mode.
**Fig. 8**
   [Fig. 8] is a perspective view of the main body of figure 2 in an AC mode - battery cooling.
**Fig. 9**

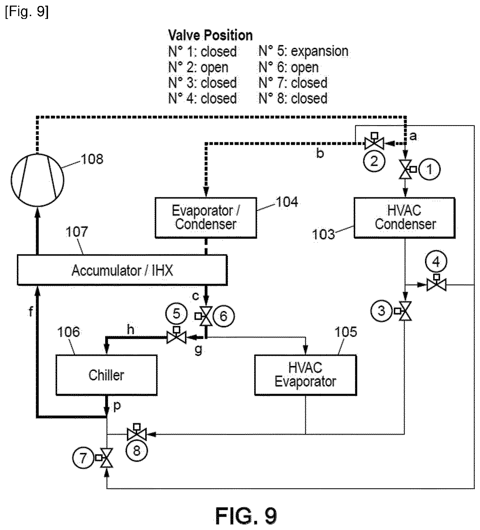

   [Fig. 9] is a schematic view of the fluid connections of figure 5 in the AC mode - battery cooling.
**Fig. 10**

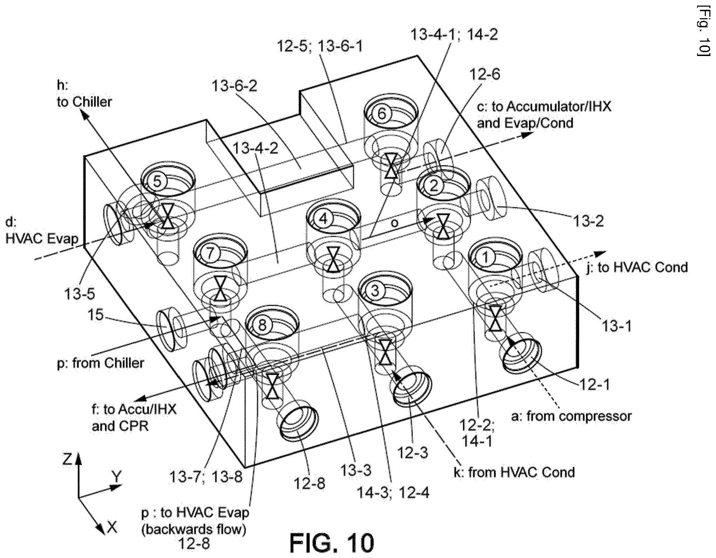

   [Fig. 10] is a perspective view of the main body of figure 2 in a HP mode - cabin heating with ambient heat.
**Fig. 11**

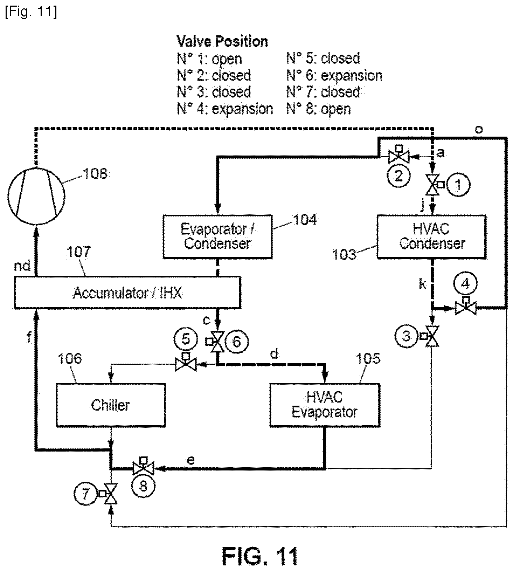

   [Fig. 11] is a schematic view of the fluid connections of figure 5 in the HP mode - cabin heating with ambient heat.
**Fig. 12**

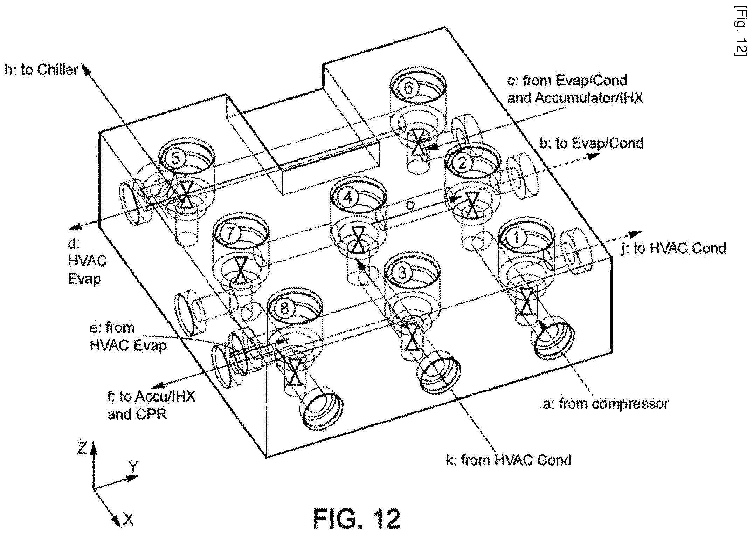

   [Fig. 12] is a perspective view of the main body of figure 2 in a HP mode - ambient heat and heat recovery.
**Fig. 13**

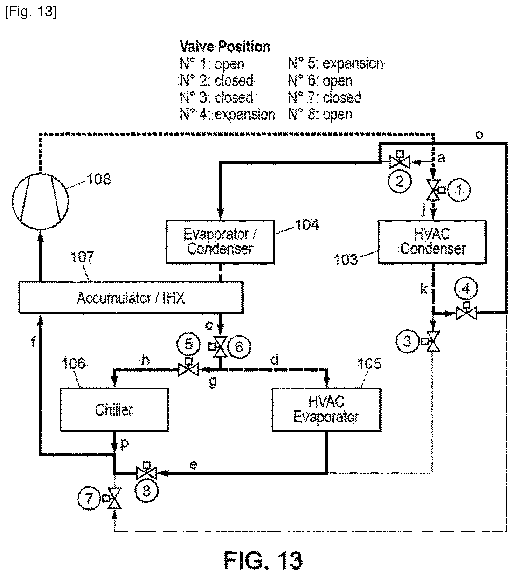

   [Fig. 13] is a schematic view of the fluid connections of figure 5 in the HP mode - ambient heat and heat recovery.
**Fig. 14**

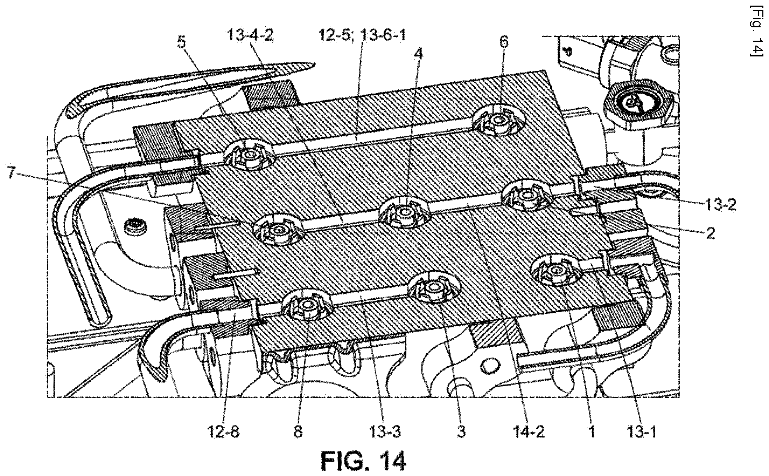

   [Fig. 14] is a perspective view of the valve block of figure 1 from an upper side section.
**Fig. 15**

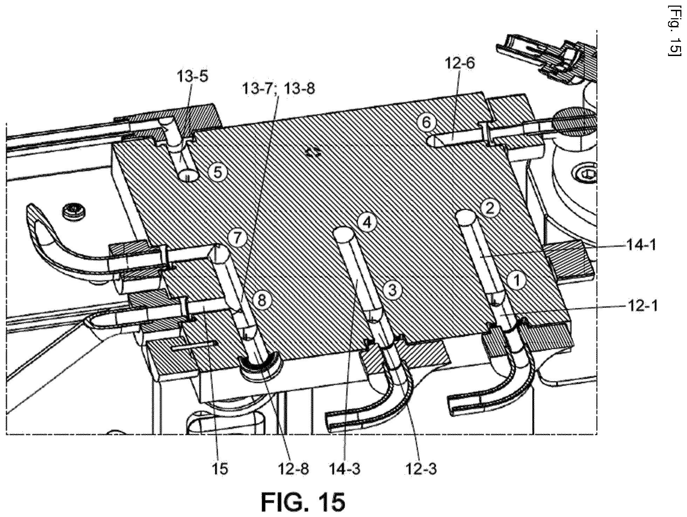

   [Fig. 15] is a perspective view of the valve block of figure 1 from a bottom side section.
**Fig. 16**

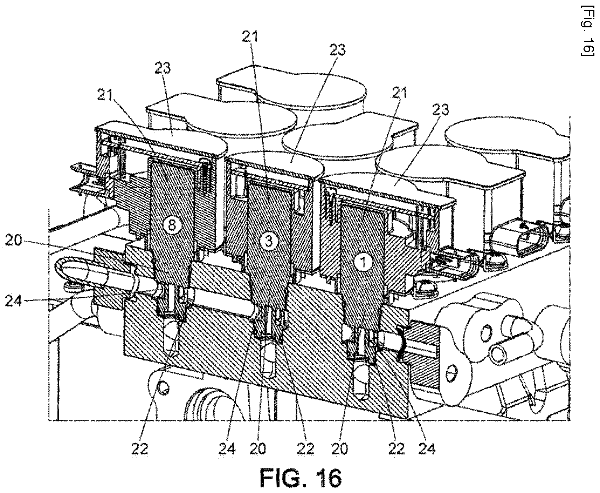

   [Fig. 16] is a perspective view of the valve block of figure 1 in a section according to an X-direction.
**Fig. 17**

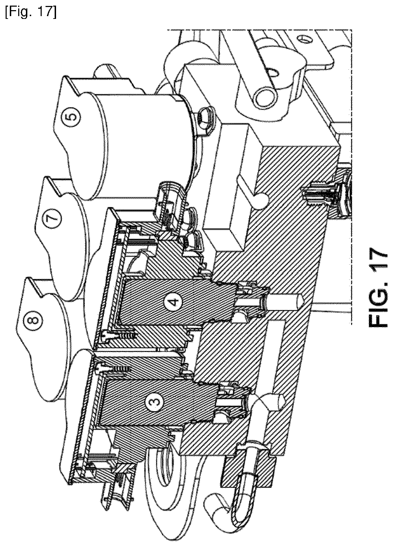

   [Fig. 17] is a perspective view of the valve block of figure 1 in another section according to a Y-direction.

### Description of Embodiments

In the figures, an arbitrary triplet (X, Y, Z) is shown to simplify the description for the reader.

As shown from figures 1 to 17, the present invention relates to a valve island or block 100 for a refrigerant fluid distribution device 101 of a thermal management system 102.

As can be seen particularly from figures 3, 4 and 5, the thermal management system 102 comprises a heat ventilation and air conditioning system (HVAC) condenser 103, an evaporator-condenser 104, an HVAC evaporator 105, a chiller 106, an accumulator/IHX (Internal Heat Exchanger) 107, and a compressor 108.

The valve block 100 comprises eight valves, referred to as 1 to 8.

As can be seen from the figures, the 1^{st} valve, 1, ensures the management of the refrigerant fluid into the HVAC condenser 103, the 1^{st} valve being arranged to be connected to the compressor 108. The 2^{nd} valve, 2, ensures the management of the refrigerant fluid into the evaporator-condenser 104, the 2^{nd} valve being arranged to be connected to the compressor 8. The 3^{rd} valve, 3, is arranged between an exit of the HVAC condenser 103 and the 8^{th} valve, 8. The 4^{th} valve, 4, is arranged between the exit of the HVAC condenser 103 and the 7^{th} valve, 7. The 5^{th} valve, 5, ensures the management of the refrigerant fluid into the chiller 106, arranged between the 6^{th} valve, 6, and able to be connected to the chiller 106. The 6^{th} valve, 6, is arranged between an exit of the accumulator/IHX 107 and the 5^{th} valve. The 7^{th} valve, 7, is arranged between the 4^{th} valve and the accumulator/IHX 107, and the 8^{th} valve, 8, is arranged between the 3^{rd} valve and the accumulator/IHX 107.

Preferable, all the valves 1 to 8 can open and close in two directions. At least valves 4, 5 and 6, and preferably all the valves can expand in both directions.

The functioning of the thermal management system is described below according to different modes.

In a cabin cooling mode illustrated in figures 6 and 7, the arrangement of the valves is the following:
- the 1^{st} valve is closed,
- the 2^{nd} valve is open,
- the 3^{rd} valve is closed,
- the 4^{th} valve is closed,
- the 5^{th} valve is closed,
- the 6th valve is the expansion valve,
- the 7th valve is closed, and
- the 8th valve is open.

In this mode, the compressor ensures the circulation of the refrigerant fluid (in a high pressure, high temperature, gaseous state) through the 2^{nd} valve to the evaporator-condenser that works as a condenser. There, the refrigerant fluid cools down and condenses into the liquid phase. The fluid then flows to the expansion (6^{th}) valve where it is regulated to flow at a proper rate before penetrating the HVAC evaporator where it evaporates and returns to the compressor through the 8th valve and the accumulator. The air of the cabin is cooled down thanks to the thermal exchanges with the refrigerant fluid in the HVAC evaporator.

In a battery cooling mode illustrated in figures 8 and 9, the arrangement of the valves is the following:
- the 1^{st} valve is closed,
- the 2^{nd} valve is open,
- the 3^{rd} valve is closed,
- the 4^{th} valve is closed,
- the 5^{th} valve is the expansion valve,
- the 6^{th} valve is open,
- the 7^{th} valve is closed, and
- the 8^{th} valve is closed.

In this mode, the compressor ensures the circulation of the refrigerant fluid (in a high pressure, high temperature, gaseous state) through the 2^{nd} valve to the evaporator-condenser that works as a condenser. There, the refrigerant fluid cools down and condenses into the liquid phase. The fluid then flows to the expansion (5^{th}) valve through the 6^{th} valve. In the expansion valve, the fluid is regulated to flow at a proper rate before penetrating the chiller where it evaporates and returns to the compressor through the accumulator while the 8^{th} valve is closed. The battery is cooled down by a coolant that is cooled down thanks to the thermal exchanges with the refrigerant fluid in the chiller.

In a heat pump mode illustrated in figures 10 and 11, the cabin being heated with the ambient heat, the arrangement of the valves is the following:
- the 1^{st} valve is open,
- the 2^{nd} valve is closed,
- the 3^{rd} valve is closed,
- the 4^{th} valve is the expansion valve,
- the 5^{th} valve is closed,
- the 6^{th} valve is open,
- the 7^{th} valve is closed, and
- the 8^{th} valve is open.

In this mode, the compressor ensures the circulation of the refrigerant fluid (in a high pressure, high temperature, gaseous state) through the 1^{st} valve to the HVAC condenser. In the HVAC condenser, the cabin air is heated while the refrigerant fluid cools down. The fluid then flows to the expansion (4^{th}) valve wherein the fluid is regulated to flow at a proper rate before penetrating the evaporator-condenser working as an evaporator. In the evaporator-condenser, the refrigerant fluid evaporates and returns to the compressor through the 6^{th} valve, the HVAC evaporator, the 8^{th} valve and the accumulator. The HVAC evaporator ensures the dehumidification of the air flowing through the HVAC condenser.

In another heat pump mode, illustrated in figures 12 and 13, the cabin being heated with the ambient heat and further providing heat recovery, the arrangement of the valves is the following:
- the 1^{st} valve is open,
- the 2^{nd} valve is closed,
- the 3^{rd} valve is closed,
- the 4^{th} valve is an expansion valve,
- the 5^{th} valve is an expansion valve,
- the 6^{th} valve is open,
- the 7^{th} valve is closed, and
- the 8^{th} valve is open.

In this mode, the compressor ensures the circulation of the refrigerant fluid (in a high pressure, high temperature, gaseous state) through the 1^{st} valve to the HVAC condenser. In the HVAC condenser, the cabin air is heated while the refrigerant fluid cools down and condenses into the liquid phase. The fluid then flows to the expansion (4^{th}) valve wherein the fluid is regulated to flow at a proper rate before penetrating the evaporator-condenser working as an evaporator. In the evaporator-condenser, the refrigerant fluid evaporates and returns to the compressor through two distinct circuit: in a first circuit, the fluid flows through the 6^{th} valve, the HVAC evaporator, for dehumidification, the 8^{th} valve and the accumulator, and, in a second circuit, the fluid flows through the 5^{th} valve and the chiller. In the chiller, the refrigerant recovers heat from the coolant which has been heated up by, for example, the electrical motor of the vehicle (further heat recovery inside through the chiller.

The valve block 100 is now detailed.

As can be seen from the figures, the valve block 100 comprises a main body 10. The main body 10 present a general parallelepiped form.

Each valve 1 to 8 comprises a bore 11-1 to 11-8 inside the main body 10 of the valve block 100. In other words, all the valves of the distributing device 102 are centralized on one single distribution block, the valve block 100.

Each bore 11-1, ..., 11-8 is a cylinder extending to along an axis called valve axis, referred to as A-1 to A-8.

The axis A1 to A8 are all parallel. Although not limitating, the axis A1 to A8 extend along the vertical Z-direction in the figures.

As can be seen from the figures, the 1^{st} valve, the 3^{rd} valve and the 8^{th} valve are aligned in the sense that a same straight line, called L1, is perpendicular to the valve axis A1 of the 1^{st} valve, the valve axis A3 of the 3^{rd} valve, and the valve axis A8 of the 8^{th} valve. Although not limitating, the line L1 extends along the Y-direction in the figures.

Also, the 7^{th} valve, the 4^{th} valve and the 2^{nd} valve are aligned in the sense that a same straight line, called L2, is perpendicular to the valve axis A7 of the 7^{th} valve, the valve axis A4 of the 4^{th} valve, and the valve axis A2 of the 2^{nd} valve.

And, the 5^{th} valve and the 6^{th} valve are aligned in the sense that a same straight line, called L3, is perpendicular to the valve axis A5 of the 5^{th} valve and to the valve axis A6 of the 6^{th} valve.

The lines L1 to L3 are preferably parallel one to another. The invention is not limited by this configuration and one of the lines can be inclined from the other ones. For instance, L3 can have an inclined angle compared to L1 and L2.

As can be seen from the figures, the 1^{st} valve, the 2^{nd} valve and the 6^{th} valve are aligned in the sense that a same straight line, called LL1, is perpendicular to the valve axis A1 of the 1^{st} valve, the valve axis A2 of the 2^{nd} valve, and the valve axis A6 of the 6^{th} valve. Although not limitating, the line LL1 extends along the X-direction in the figures.

Also, the 3^{rd} valve and the 4^{th} valve are aligned in the sense that a same straight line, called LL2, is perpendicular to the valve axis A3 of the 3^{rd} valve and to the valve axis A4 of the 4^{th} valve.

And, the 8^{th} valve, the 7^{th} valve and the 5^{th} valve are aligned in the sense that a same straight line, called LL3, is perpendicular to the valve axis A8 of the 8^{th} valve, the valve axis A7 of the 7^{th} valve, and the valve axis A5 of the 5^{th} valve.

The lines LL1 to LL3 are preferably parallel one to another. The invention is not limited by this configuration and one of the lines can be inclined from the other ones. For instance, LL3 can have an inclined angle compared to LL1 and LL2.

Preferably, the lines LL1 to LL3 are perpendicular to the lines L1 to L3.

As can be seen from the figures, each valve comprises an entry channel 12-1, ..., 12-8 for feeding the valve with the refrigerant fluid and at least an exit channel, 13-1,..., 13-8, for exiting the refrigerant from the valve.

Said channels are bores inside the main body 10 of the valve block 100. The channels extend preferably either along the X-direction or the Y-direction, on two levels along the Z-direction, a first level called low level (LL), and a second level, called high level (HL).

At least a few valves also comprise one or a plurality of bypass channel 14-1, ..., so that the refrigerant fluid can flow in the valve block while bypassing the valve. The bypass channels 14-1, ..., extend preferably either along the X-direction or the Y-direction, either on the low level LL or the high level HL.

The entry channels, the exit channels, and the bypass channels are now described for each valve.

For the valve 1, the entry channel 12-1 extends from the outside of the main body 10 along the X-direction at the low level LL and the exit channel 13-1 extends along the Y-direction to the outside of the main body at the high level HL.

The bypass channel 14-1 extends in the X-direction at the low level LL from the bore of the valve 1 to the bore of the valve 2. The bypass channel 14-1 ensures direct fluid connection between the compressor and the valve 2 (by bypassing valve 1).

For the valve 2, the entry channel 12-2 extends along the X-direction at the low level LL and the exit channel 13-2 extends along the Y-direction at the high level HL to the outside of the main body 10. The entry channel 12-2 is collinear with the entry channel 12-1. The entry channel 12-2 is also the bypass channel 14-1.

The valve 2 also comprises a bypass channel 14-2 that extends at the high level HL along the Y-direction from the bore of the valve 4 to the bore of the valve 2. The bypass channel 14-2 ensures direct fluid connection between the valve 4 and the evaporator-condenser 104 (by bypassing valve 2).

For the valve 3, the entry channel 12-3 extends from the outside of the main body 10 along the X-direction at the low level LL and the exit channel 13-3 extends along the Y-direction at the high level HL The exit channel 13-3 fluidly connects the valve 3 to the valve 8.

The bypass channel 14-3 extends at the low level LL in the X-direction from the bore of the valve 3 to the bore of the valve 4. The bypass channel 14-3 is collinear with the entry channel 12-3. The bypass channel 14-3 ensures direct fluid connection between the HVAC condenser and the valve 4 (by bypassing the valve 3). The bypass channel 14-3 is also the entry channel 12-4 of the valve 4.

For the valve 4, the entry channel 12-4 extends along the X-direction at the low level LL, and a first exit channel 13-4-1 extends along the Y-direction at the high level HL. The exit channel 13-4-1 is collinear with the exit channel 13-2.

The valve 4 also comprises a second exit channel 13-4-2 colinear with the first exit channel 13-4-1 and extends to the valve 8.

For the valve 5, the entry channel 12-5 extends along the Y-direction at the high level HL from the valve 6 and the exit channel 13-5 extends along the X-direction at the low level LL to the outside of the main body 10 (to the chiller 106).

For the valve 6, the entry channel 12-6 extends from the outside of the main body 10 along the Y-direction at the low level LL (to fluidly connect the valve 6 to the evaporator-condenser and the accumulator/IHX).

The valve 6 comprises two exit channels. A first exit channel 13-6-1 is the entry channel 12-5. A second exit channel 13-6-2 extends from the valve 6 to the outside of the main body 10 to fluidly connect the valve 6 to the HVAC evaporator 105. The second exit channel comprises a first part that extends from the valve 6 at the high level HL and another part extending along the Z-direction from the high level HL to the low level LL and a final portion along the X-direction to the outside of the main body 10.

For the valve 7, the entry channel 12-7 is the exit channel 13-4-2.

For the valve 8, the entry channel 12-8 extends from the outside of the main body 10 along the X-direction at the low level LL to fluidly connect the valve 8 to the HVAC evaporator. The exit channel 13-7 of the valve 7 and the exit channel 13-8 of the valve 8 correspond. It extends at the low level LL between the bore of the valve 7 and the bore of the valve 8. Another channel 15 extending along the Y-direction fluidly connects the channel 13-7, 13-8 to the outside of the main body 10 (to the accumulator/IHX and the compressor).

The main body 10 also comprises a channel to connect the main body 10 to the chiller.

The diameters of the entry, exit and bypass channels are chosen in dependence of the system function. For instance, when the refrigerant fluid is R744: 6 to 8 mm (for the high pressure channels) and 12mm (for the low pressure channels). When the refrigerant fluid is R1234yf: 10-12mm (for the high pressure channels) and 16mm (for the low pressure channels).

As can be seen, the entry, exit and bypass channels build interfaces to other components of the thermal management system 102 (i.e., for instance, compressor, heat exchangers, refrigerant bottle), which implies that the system 102 comprises very few pipes.

Thanks to the single valve block, the refrigerant fluid distribution device is very compact, such that the volume occupied by the thermal management system 102 in the vehicle is reduced. It is also easy to adapt to different system layouts. Connectivities between the valves are minimized, as well as the AC-Pipe routing between the valves. Also, it ensures an easy integration of additional components like check valves or charge valves.

The process of manufacturing is also simplified since a single block needs to be machined to form the main body 10.

Although not illustrated, other variants are covered by the present invention. For instance, the main body can be precast instead of machined. At least some of the entry, exit, bypass channels could be diagonal channels instead of perpendicular channels. The valve module could also integrate additional components, like check valves, PT (pressure temperature)-sensors, charge valves. It is possible to operate a direct connectivity of the valve island with other components, for example a chiller. Other types of valves could be used (i.e. shut off valve, closed-expansion (CE) valve, closed expansion full open (CEO) valves). The integration of the valves could be from different sides, i.e. opposite top and bottom sides. The valve module can be adapted to different refrigerants, i.e. R744, R1234yf, R134a, R290 and others.

A valve is now detailed with reference to figures 1, 3, 4, 16 and 17.

As can be seen from these figures, each valve 1, ...8, comprises a plunger or piston 20 that extends longitudinally along the axis of the valve between an upper end 21 and a bottom end 22. The upper end 21 is fixed to a housing 23 of the valve.

The piston 20 is of a general cylinder form and is able to slide into the bore valve 11-1,..., 11-8 against an internal wall of the bore valve between a closed position and an open position.

In the closed position, the bottom end 22 rests against a seat of the valve, which prevents fluid from flowing through the valve. In the open position, the bottom end 22 is spaced from the seat of the valve, which authorizes the fluid flowing through the valve.

As seen from the sectional views of figures 16 and 17, the upper part of the valves comprises a shoulder 24 corresponding of a diameter reduction of the piston 24. The diameter reduction ensures the flowing of the fluid in the entry, exit and bypass channels that are located at the high level HL.

## Claims

1. Valve module comprising a main body (10), said main body (10) comprising:
- at least one bore (11-1, ...11-8) inside said main body (10) along an axis called valve axis (A1, ...A8), the said bore (11-1, ...11-8) being configured to receive a valve (1, ...8),
- at least one entry channel (12-1, ...12-8) for feeding the valve (1, ...8) with a fluid and one exit channel (13-1, ...13-8) for evacuating the said fluid from the valve (1, ...8),
wherein at least one of the entry channels (12-1 , ...12-8) and the exit channels (13-1 , ...13-8) extends on a first level (LL) and at least one of the entry channels (12-1, ...12-8) and the exit channels (13-1, ...13-8) extends on a second level (HL).

2. Valve module according to the preceding claim, wherein all valve axis (A1, ...A8) are parallel one to another.

3. Valve module according to claim 1 or 2, wherein each valve (1, ...8) comprises at least one entry channel (12-1, ...12-8) and one exit channel (13-1, ...13-8), the entry channels (12-1, ...12-8) and the exit channels (13-1, ...13-8) being parallel or perpendicular one to another.

4. Valve module according to any of the preceding claims, further comprising at least one bypass channel (14-1, ...) for bypassing at least one valve (1, ...8) of the valve module.

5. Valve module according to claim 4, wherein said at least one bypass channel (14-1, ...) extends parallel or perpendicular to the entry channels (12-1, ...12-8) and the exit channels (13-1, ...13-8).

6. Valve module according to claim 4 or 5, wherein said at least one bypass channel (14-1, ...) extends on the first level (LL) or on the second level (HL).

7. Valve module according to any of the preceding claims, the valve module comprising in a same block (100) a 1st valve (1), a 3rd valve (3) and a 8th valve (8), wherein at least two of the 1st valve (1), the 3rd valve (3) and the 8th valve (8) are aligned in the sense that a same line is perpendicular to the valve axis of the 1st valve (1), the valve axis of the 3rd valve (3), and the valve axis of the 8th valve (8).

8. Valve module according to claim 7, the valve module comprising in a same block (100) a 7th valve (7), a 4th valve (4) and a 2nd valve (2), wherein at least two of the 7th valve (7), the 4th valve (4) and the 2nd valve (2) are aligned in the sense that a same line is perpendicular to the valve axis of the 7th valve (7), the valve axis of the 4th valve (4), and the valve axis of the 2nd valve (2).

9. Valve module according to claim 8, the valve module comprising in a same block (100) a 5th valve (5) and a 6th valve (6), wherein the 5th valve (5) and the 6th valve (6) are aligned in the sense that a same line is perpendicular to the valve axis of the 5th valve (5) and to the valve axis of the 6th valve (6).

10. Valve module according to claim 9, wherein at least two of the 1st valve (1), the 2nd valve (2) and the 6th valve (6) are aligned in the sense that a same line is perpendicular to the valve axis of the 1st valve (1), the valve axis of the 2nd valve (2), and the valve axis of the 6th valve (6).

11. Valve module according to any of claims 9 to 10, wherein at least two of the 8th valve (8), the 7th valve (7) and the 5th valve (5) are aligned in the sense that a same line is perpendicular to the valve axis of the 8th valve (8), the valve axis of the 7th valve (7), and the valve axis of the 5th valve (5).

12. Valve module for a refrigerant fluid distribution device (101) of a thermal management system (102) according to any of claims 7 to 11, the thermal management system (102) comprising a refrigerant fluid circuit comprising:
- a compressor (108),
- a first heat exchanger (103),
- at least one valve (1,... 8) being an expansion valve,
- an evaporator (105, 106),
the expansion valve being arranged on the valve module.

13. Valve module according to claim 12, wherein at least one valve (1,... 8) of the valve module is disposed upstream of the first heat exchanger (103).

14. Valve module according to any of claims 11 to 12, wherein the evaporator (105, 106) is arranged on the main body (10) of the valve module, preferably on the face of the valve module opposite to the face receiving the valves (1,... 8).
